# EUROPEAN PATENT SPECIFICATION

(11) **EP 2 138 245 B1**
(45) Date of publication and mention of the grant of the patent: **12.10.2011**
(21) Application number: 08425453.1
(22) Date of filing: 26.06.2008
(51) Int. Cl.: B09C 1/10, B09C 1/02

(54) **Process for decontaminating soils polluted by at least one pollutant among hydrocarbons, dioxin and phenols**
Verfahren zur Entgiftung von Böden, die durch mindestens einen der Giftstoffe Kohlenwasserstoffen, Dioxin und Phenole vergiftet sind
Procédé pour la décontamination des sols pollués par au moins un polluant parmi des hydrocarbures, dioxine et phénols

(43) Date of publication of application: 30.12.2009
(73) Proprietor: Biodermol S.r.l., 38015 Lavis (TN) (IT)
(72) Inventor: Baruchelli, Dario, 38100 Trento (IT); Baruchelli, Mauro, 38057 Madrano di Pergine di Valsugana (Trento) (IT)
(74) Representative: Bottero, Carlo

(56) References cited:
- EP-A- 1 106 270
- WO-A-96/28400
- WO-A-2006/067085
- DE-A1- 19 836 946
- US-A- 5 232 596
- US-A- 5 545 801
- Zentraler Fachdienst Wasser-Boden-Abfall-Altlasten bei der Landesanstalt für Umweltschutz Baden-Württemberg: "Handbuch Bodenwäsche", 30 April 1993 (1993-04-30), Landesanstalt für Umweltschutz Baden-Württemberg, Karlsruhe 11 * pages 35-36 * * page 45 * * page 55 * * page 156 * * page 163 *

## Description

The present invention relates to a process for decontaminating soils polluted by at least one pollutant among hydrocarbons, dioxin and phenols. The treatment and decontamination of materials containing harmful substances is considerably and increasingly important in the most diverse sectors. One example of this is the frequent demand for recovering soils that have been contaminated with organic products such as hydrocarbon compounds. These pollutants usually originate from industrial processes: indeed, the production, transportation and storage of dangerous chemical products (for example fuels) has resulted in environmental contamination which damaged the ecosystem.

In particular, the damage caused by soil contamination includes the build-up of pollutants in plants and animals. Moreover, such pollutants may partly dissolve in waters, thus damaging surface waters and the water tables.

There are already several prior art methods for the treatment of soils polluted by at least one pollutant among hydrocarbons, dioxin and phenols.

Decontamination technologies allow substances which pollute soil to be eliminated or rendered harmless. Depending on the main mechanism on which they are based, there are chemical, physical, thermal and biological technologies.

Chemical treatments, using suitable reactions of the oxidation - reduction type (redox reactions), transform pollutants into less toxic substances. Physical treatments (for example extraction using steam) are based on systems capable of separating pollutants from the matrix and obtaining them in concentrated form. The concentrated pollutants are then subjected to a final treatment (for example extraction with solvent).

Thermal treatments aim both to destroy the pollutant (pyrolysis) and to immobilise it by melting the medium which contains it.

Biological treatments normally use micro-organisms for which the pollutants are food, with degradation of the pollutant into carbon dioxide and water. Decontamination processes may be applied directly at the site of the contamination, that is to say, *in situ,* or after excavating the contaminated soil, that is to say, *ex situ.* In turn, *ex situ* treatments are defined *on site* if carried out at the site of the excavation or *off site* if remote plant must be used.

Chemical treatments have the disadvantage due to the fact that, in most cases, in polluted soils, aggressive synthetic chemicals are used, which bring their own risk of harming the environment. Secondly, chemical, physical and thermal treatments have polluting waste products, which therefore in turn require special devices to avoid further pollution.

Moreover, in most applications these decontamination methods involve the contaminated soil having to be excavated and transported to a remote decontamination site, consequently increasing the costs and time needed for decontamination.

Finally, generally speaking, the methods described last for a relatively long period of time.

The limits of the above-mentioned treatments mean that the practice of dumping polluted soil, which is not an effective solution to pollution but instead just moves it from one place to another, is still very widespread. The document US5545801 shows a generic process for the decontamination of with hydrocarbons contaminated soil, comprising several stirring steps.

In this situation the technical purpose which forms the basis of the present invention is to provide a process for decontaminating soils polluted by organic compounds, in particular by at least one pollutant among hydrocarbons, dioxin and phenols, which overcomes the above-mentioned disadvantages.

In particular, the present invention has the technical purpose to provide a process for decontaminating soils polluted by at least one pollutant among hydrocarbons, dioxin and phenols which does not involve the use of aggressive synthetic chemicals, which themselves represent a danger to the environment.

A second technical purpose of the present invention is to provide a process for decontaminating soils polluted by at least one pollutant among hydrocarbons, dioxin and phenols which does not produce polluting waste.

The present invention also aims to provide a process for decontaminating soils polluted by at least one pollutant among hydrocarbons, dioxin and phenols which can be applied directly on site by excavating the contaminated soil and treating it in situ.

Moreover, the present invention aims to provide a process for decontaminating soils polluted by at least one pollutant among hydrocarbons, dioxin and phenols which is of relatively brief duration and which provides optimum reduction of the levels of contamination. Finally, yet another technical purpose of the present invention is to provide a process for decontaminating soils polluted by at least one pollutant among hydrocarbons, dioxin and phenols which is reliable and relatively inexpensive.

These aims and others, which are clearer in the description that follows, are achieved by a process for decontaminating soils polluted by at least one pollutant among hydrocarbons, dioxin and phenols comprising the technical features described in claim 1.

Further advantageous embodiments of the invention are presented in the dependent claims.

Other features and advantages are more apparent in the detailed description which follows, of a preferred, non-limiting embodiment of a process for decontaminating soils polluted by at leat one pollutant among hydrocarbons, dioxin and phenols in accordance with the present invention.

Said description is provided below with reference to the accompanying drawings, provided by way of example only and, therefore, non-limiting, in which:
- Figure 1 is a schematic view of a plant for decontaminating soils polluted by at least one pollutant among hydrocarbons, dioxin and phenols, suitable for implementing the process in accordance with the present invention;
- Figure 2 is a block diagram of operation of the plant of Figure 1.

The decontamination process in accordance with the present invention is for decontaminating soils polluted by at least one pollutant among hydrocarbons, dioxin and phenols. As regards hydrocarbons, the process is for decontamination from both light hydrocarbons (C ≤ 12, that is to say, hydrocarbons with twelve carbon atoms or less) and from heavy hydrocarbons (C > 12, that is to say, hydrocarbons with more than twelve carbon atoms), reducing or eliminating the quantities of hydrocarbons: for example, bringing their concentrations to acceptable levels for soils on land intended for constructions for houses (levels normally defined by national legislation):

In general said process comprises various operating steps.

The soil to be decontaminated will initially be excavated and preferably homogenised so as to overcome the problem of any presence of high concentrations of toxic pollutants and of high concentrations of clay. The soil is preferably homogenised by simply mixing the soil.

The excavated polluted soil is preferably initially sieved to separate the part with particle size measurement less than a predetermined threshold value from the part with particle size measurement greater than said predetermined threshold value. The predetermined threshold value is preferably between 30 and 100 mm, according to the soil particle size curve. In particular, the predetermine threshold value will be selected towards the lower limits of the range when the particle size curve does not have high percentages of clay, and towards the upper limits of the range if there is a high level of clay present.

Said initial sieving step is carried out because the part of the soil with the greater particle size measurement (normally consisting of stones) is not usually polluted and so can be stored and excluded from the treatment, since it is already suitable to be put back on the ground as soil that it not polluted. Therefore, the initial sieving step reduces the quantity of soil to be treated, being a considerable advantage in economic terms.

Then the polluted soil (sieved or without having been sieved) is mixed with a first aqueous solution, containing one or more enzymes, whose function is to accelerate the microbial degradation of the pollutants. In this way a solid - liquid mass is obtained.

Mixing takes place in a reactor with a stirrer in which there are placed a first predetermined quantity of polluted soil, already naturally comprising micro-organisms, electron acceptors (mainly oxygen) and surfactants.

The function of the surfactants is to promote the capture of the hydrocarbons in an aqueous medium in which they would otherwise be practically insoluble and to facilitate passage of the hydrocarbons through the cell wall of the micro-organisms, which is, as is known, hydrophilic. The function of the enzymes in the first aqueous solution is to accelerate the microbial degradation of the pollutants. Said degradation occurs thanks to the action of the micro-organisms and the electron acceptors already present in the soil. Advantageously, the first aqueous solution comprises one or more enzymes selected from the group comprising hydrolase, protease, lipase, amylase, cellulase, carboxylase, catalase and phospholipase.

More specifically, enzymes are used which are derived from bacteria of the Bacilli family (including "Bacillus licheniformis") or Pseudomonas or from fungi of the Thermomyces family (including "Thermomyces lanuginosus") or from "Aspergillus Oryzae". Moreover, the enzymes contained in pancreatin are preferably used.

The process then involves the operating step of stirring the solid - liquid mass for a predetermined time, so that said one or more enzymes can carry out their catalytic action for the break up of the pollutants by the micro-organisms present in the polluted soil. Stirring is intended to improve the solid - liquid contact and the water creates the best conditions for the micro-organisms to attack the pollutant.

The relationship between the quantity of the first aqueous solution and the quantity of polluted soil, the concentration of enzymes in the first aqueous solution and the duration of the operating step of stirring the solid - liquid mass are a function of various parameters. In particular, they are a function of the polluted soil particle size curve, of the extent of the pollution (quantity of pollutant) and of the type of pollution (in the case of hydrocarbons, ratio of light hydrocarbons and heavy hydrocarbons C ≤ 12 / C > 12) of the soil. Therefore, the ratio of the quantity of the first aqueous solution and the quantity of polluted soil, the concentration of enzymes and the duration of the stirring operating step must be defined on a case by case basis according to requirements, by means of initial setup tests on a pilot plant.

The presence of the aqueous medium allows two basic actions to be carried out:
- it improves the performance of the micro-organisms because the effectiveness of their action is proportional to the water activity value (aw) of the medium in which they are found (solid - liquid mass);
- it allows the enzymes to carry out their catalytic action since it is easier for them to make contact with the components of the reaction to be catalysed compared with what would happen if there was only contaminated soil.

The surfactants (for example produced by the micro-organisms present in the soil) promote the formation of pollutant water emulsions. The emulsified pollutants acquire hydrophilic properties such that they can pass through the micro-organism cell wall. Once they have entered the microbial cell, the pollutants are gradually broken up by means of a succession of chemical reactions of oxidation and other types. In order to take place, each of these reactions needs an electron acceptor, usually oxygen, and a catalyst consisting of a specific protein (enzyme).

Thus a metabolic path with two or more steps is activated, involving a chemical reaction, with the intervention of an enzyme, which catalyses the transformation of a pollutant into a first by-product. Said first by-product is in turn transformed into a second by-product, thanks to a subsequent enzyme, with another chemical reaction. The metabolic path continues with similar successive chemical reactions, until the pollutant has been partly or completely mineralised and transformed into carbon dioxide and water. For example, the metabolic path of degradation of alkanes may be summarised as follows:
CH₃-(CH₂)ₙ-CH₃ (alkane) + ½ O₂ = CH₃-(CH₂)ₙ-CH₂OH (alcohol)
CH₃-(CH₂)ₙ-CH₂OH + O₂ = CH₃-(CH₂)ₙ-COOH (carboxylic acid) + H₂O whilst the metabolic path for degradation of benzene may be summarised as follows:
   BENZENE + O₂ = CATECHOL
   CATECHOL + O₂ = COOH-CH=CH=CH=CH-COOH (muconic acid)
   COOH-CH=CH=CH=CH-COOH + H₂O COOH-CH₂-CO-CH₂-CH₂-COOH
   COOH-CH₂-CO-CH₂-CH₂-COOH + H₂O = COOH-CH₂-CH₂-COOH + CH₃-COOH

Each step of the above-mentioned processes involves the intervention of at least one enzyme, even if for the sake of clarity this is not indicated in the formulas shown above.

Both the alcohols and the carboxylic acids, formed during the chemical reactions, are secreted by the micro-organism cell. They are then broken up into carbon dioxide and water either in the same process or in a subsequent biological treatment and are in turn used as surfactants to improve the dispersion of hydrocarbons in the water.

At this point, upon completion of the operating step of stirring the soil with the first aqueous solution containing one or more enzymes, the process involves the operating step of separating the solid - liquid mass. Said step involves dividing the solid - liquid mass into a residual aqueous suspension and into a solid part which therefore contains a reduced quantity of pollutant. Said step may be carried out in various ways, such as sieving or centrifuging.

The latter operating step preferably comprises two further operating steps. First, the process involves sieving the solid - liquid mass, so as to divide it into the solid part and into a second aqueous suspension. Sieving is carried out so that the solid part comprises the soil with a particle size measurement greater than 500 microns (obviously, if initial sieving was performed at the start of the process, the solid part will have a particle size measurement of between 500 microns and the predetermined threshold value). The process then involves the operating step of filtering the second aqueous suspension to obtain the residual aqueous suspension.

The decontaminated soil from filtration, containing 15 - 20% of water with the part of enzymes not deteriorated during the process, is mixed with the decontaminated soil having a particle size measurement between 500 microns and the predetermined threshold value, from the step of sieving the solid - liquid mass (containing 15 - 20% of water with its enzymes not deteriorated), thus obtaining the solid part consisting of a wet decontaminated soil.

Thanks to the presence of air incorporated in the mixing operations, of moisture, of micro-organisms and of enzymes present in the wet decontaminated soil, the microbial biodegradation of any residual pollutant in the soil continues and there are further reductions of any pollutant load of around 70 - 90% in a 1 - 2 month period of time.

After the operating step of separating the solid part from the residual aqueous suspension, the solid part is stored and, if necessary, united and mixed with the part of the decontaminated soil which has a particle size measurement greater than the predetermined threshold value, which was previously stored during the initial sieving operating step.

The process may then involve various operating steps.

In one case, the process may involve the operating step of adding fresh enzymes to the residual aqueous suspension, then using this aqueous solution to which fresh enzymes have been added as the first aqueous solution. Therefore, said aqueous solution to which fresh enzymes have been added is used and mixed in the reactor with the polluted soil, during a new operating step of adding the first aqueous solution to the polluted soil. Alternatively, the process may involve the operating step of sending the residual aqueous suspension for a biological treatment and, therefore, the first aqueous solution is completely replaced.

Advantageously, the process may involve partly using both of said solutions. In particular, in the preferred embodiment, part of the residual aqueous suspension has fresh enzymes added to it and is used as the first aqueous solution, and part is sent for biological treatment and substituted with a fresh solution. During the biological treatment metabolism continues of the products formed during the treatment and dissolved or dispersed in the aqueous solution.

Advantageously, the process for decontaminating soils polluted by at least one pollutant among hydrocarbons, dioxin and phenols described above may be carried out either on site (that is to say, close to the site to be decontaminated, thus avoiding the need to transport the polluted soil far from it), or by transporting the polluted soil to plants located at other sites (off site).

Moreover, said process is preferably carried out at ambient temperature. In particular, if the process is carried out on site, the temperature depends on the time of year and the area in which the soil is located. However, the process may also be carried out at temperatures above ambient temperature, by introducing a heating fluid into reactor liner. The temperature at which the process is carried out is advantageously between 30 and 40°C, preferably between 36 and 37°C, and more preferably still at 36.5°C.

Advantageously, the decontamination process results in a concentration of light hydrocarbons (C ≤ 12) of less than 10 mg/kg in the soil and/or a concentration of heavy hydrocarbons (C > 12) of less than 50 mg/kg.

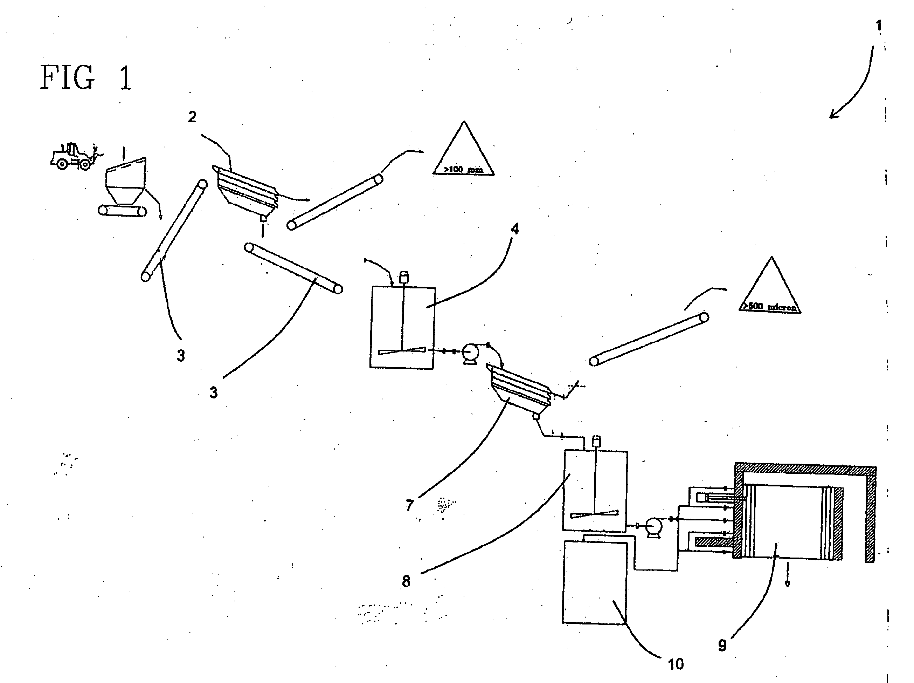

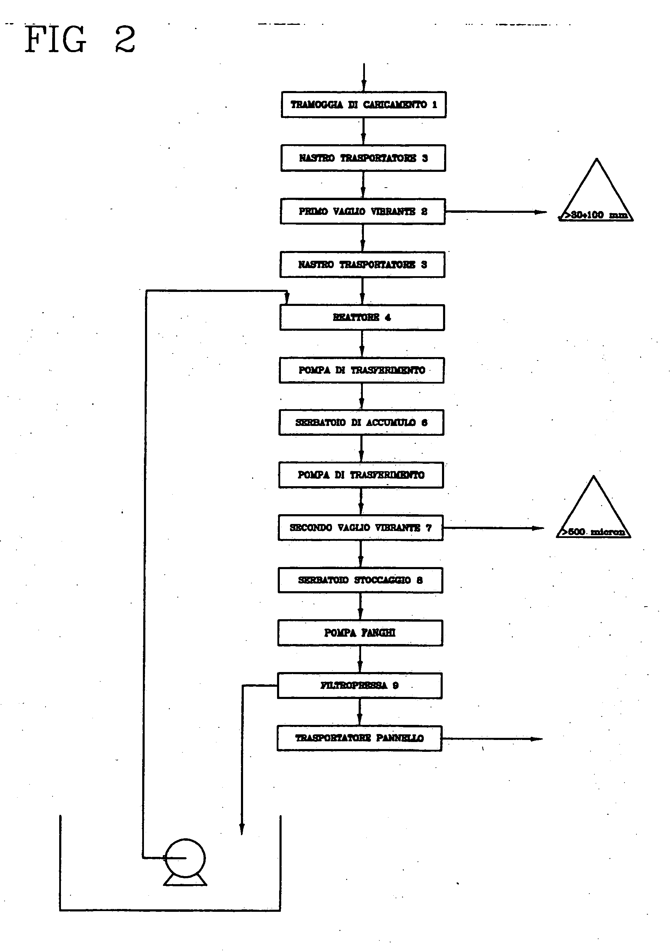

The decontamination process may be carried out using suitable plant in two ways: as an intermittent process or as a continuous process. The intermittent process is advantageously carried out with a plant for decontaminating soils polluted by at least one pollutant among hydrocarbons, dioxin and phenols, as illustrated in Figures 1 and 2.

Such a plant consists of a system for loading the polluted soil, preferably a loading hopper 1 which at the start eliminates the soil with a very high particle size measurement which could damage the downstream apparatuses (for example particle size measurement > 100 mm).

The soil is then transported to an initial dry sieving system, to separate the soil with particle size measurement greater than the predetermined threshold value from the soil with a particle size measurement less than said value. This sieving is preferably carried out using a first vibrating sieve 2.

The soil is preferably moved between the various operating steps of the process by conveyor belts 3. The soil with a particle size measurement greater than the predetermined threshold value is not treated and is therefore transported out of the plant.

Instead, the soil with a particle size measurement which is less than the predetermined threshold value is sent to a reactor 4, preferably vertical and having an inner impeller and deflectors on the walls.

As well as the polluted soil, the first aqueous solution 5 containing the enzymes is also introduced into the reactor 4. The solid - liquid mass obtained is then stirred for a predetermined time.

Once the stirring step is complete, the solid - liquid mass is transferred to a system for separating the solid part from the residual aqueous suspension.

The solid - liquid mass is preferably transported to a second vibrating sieve 7. In said sieve the soil with a particle size measurement greater than 500 microns is separated from the second aqueous suspension. Said soil may be considered decontaminated (and, that is to say, having a pollutant concentrations which is zero or less than a predetermined limit) and is therefore transported out of the plant. In contrast, the second aqueous suspension is preferably sent to a storage tank 8 then filtered using a filter press 9, to obtain the residual aqueous suspension.

Alternatively to sieving and filtering, to separate the solid part from the liquid part other methods may be used, for example sedimentation.

The residual aqueous suspension has a fresh enzymes solution added to it and is recycled or replaced with a fresh solution and sent for biological treatment 10.

The plant with a continuous process for decontaminating soils polluted by at least one pollutant among hydrocarbons, dioxin and phenols has a structure which is practically the same as that of the intermittent plant. The only operating step which differs is the step of mixing and stirring the solid - liquid mass.

The polluted soil with a particle size measurement that is less than the predetermined threshold value which preferably exits the first vibrating sieve 2 is sent, together with the first aqueous solution 5

to a reactor 4, which is preferably horizontal. The reactor 4 has an inner impeller which conveys the polluted soil against the flow of the first aqueous solution 5. Therefore, the polluted soil is preferably inserted through a first reactor 4 infeed, whilst the first aqueous solution 5 is fed from a second infeed, positioned on the opposite side to the first infeed. All of the other operating steps of the continuous process plant are identical to those of the intermittent process plant.

All of the apparatuses forming the plants described above (intermittent and continuous) may be designed sol that they can be transported, allowing decontamination to be carried out on site.

A test carried out in the field is described below by way of example.

A representative sample of polluted soil was taken from the site to be decontaminated having a 1200 m² surface area and polluted by hydrocarbons up to a depth of 3 m. The land where the soil was located was previously used as a fuel depot and the average content of total hydrocarbons was between 1000 and 1500 mg/kg depending on the areas of the soil. The hydrocarbons found were heavy hydrocarbons with C > 12 and C < 40.

The total weight of the representative sample of soil to be decontaminated (8 tons) corresponded to the industrial mixer load.

The soil was decontaminated using a prototype plant for decontaminating soils polluted by at least one pollutant among hydrocarbons, dioxin and phenols with an intermittent process, of the mobile type and consisting of a reactor with an inner impeller, a wet sieve and a filtering system.

The capacity of the prototype plant was 200 kg/h of soil to be treated. The contaminated soil was initially dry sieved to separate the fraction with a particle size measurement greater than 100 mm (selected as the predetermined threshold value and representing 10 - 15% of the total).

The fraction with a particle size measurement greater than 100 mm was then stored in the decontaminated soil area because it was generally considered not to be significantly polluted.

The fraction of contaminated soil with a particle size measurement of less than 100 mm was loaded in the reactor in a quantity of 200 kg per load.

A first aqueous solution was then added to the reactor. The solution comprised water, enzymes (obtained from pancreatin, Bacillus licheniformis, Thermomyces lanuginosus and Aspergillus Oryzae) and sodium carbonate (to bring the pH to an optimum value for enzymatic action). The quantity (by weight) of water was equal to the quantity of soil treated. The quantity (by weight) of enzymes was equal to 1.5% by weight compared with the quantity of water. And the quantity of sodium carbonate was equal to 0.5% by weight compared with the quantity of water (said quantity of sodium carbonate is needed to adjust the pH of the solution to the optimum value).

The solid - liquid mass was then stirred for a period of around one hour at an ambient temperature generally between 15 and 30°C.

The solid - liquid mass was then unloaded from the reactor and sent for wet sieving which separated the wet soil with a particle size measurement of between 500 microns and 100 mm. The separated soil had the following properties: percentage of total soil loaded 10 - 15%, moisture 25% and hydrocarbons content of less than 50 mg/kg. The hydrocarbons remaining in the soil were a residue of those that were present at the start of the treatment and which were not eliminated.

The water and the soil with a particle size measurement of less than 500 microns exiting the sieve (second aqueous suspension) were sent to a filtering system which separated the decontaminated soil from the residual aqueous suspension.

The decontaminated soil was sent to the decontaminated soil storage area.

50% of the residual aqueous suspension from each cycle was reused for a new first aqueous solution (and therefore was added to 50% of new solution) and 50% was sent to a biological treatment plant, such as the biological purifier.

The residual aqueous suspension was analyses and only non-hazardous wastes were found (classed as 161002 in the list of hazardous wastes contained in the annex to the amended decision of the European Commission 2000/532/EC).

The process for decontaminating soils polluted by at least one pollutant among hydrocarbons, dioxin and phenols disclosed achieves the preset aims. First, the process for decontaminating soils polluted by at least one pollutant among hydrocarbons, dioxin and phenols in accordance with the present invention does not involve the use of aggressive synthetic chemicals, which themselves represent a danger to the environment.

Second, the process for decontaminating soils polluted by at least one pollutant among hydrocarbons, dioxin and phenols disclosed does produce polluting wastes.

Third, the process for decontaminating soils polluted by at least one pollutant among hydrocarbons, dioxin and phenols can be carried out directly on site.

Moreover, the process for decontaminating soils polluted by at least one pollutant among hydrocarbons, dioxin and phenols disclosed is of relatively brief duration and provides optimum reduction of the levels of contamination.

Finally, it should be noticed that the present invention is reliable and that even the cost linked to implementing the invention is relatively low.

### List of reference characters

| Figure 1 | | |
|---|---|---|
| > 100 mm | | |
| > 500 microns | | |
| | | |

| Figure 2 | | |
|---|---|---|
| LOADING HOPPER | 1 | |
| CONVEYOR BELT | 3 | |
| FIRST VIBRATING SIEVE | 2 | > 30 - 100 mm |
| CONVEYOR BELT | 3 | |
| RECTOR | 4 | |
| TRANSFER PUMP | | |
| ACCUMULATION TANK | 6 | |
| TRANSFER PUMP | | |
| SECOND VIBRATING SIEVE | 7 | > 500 microns |
| STORAGE TANK | 8 | |
| SLUDGE PUMP | | |
| FILTER PRESS | 9 | |
| PANEL CONVEYOR | | |

## Claims

1. A process for decontaminating soils polluted by at least one pollutant selected from hydrocarbons, dioxin and phenols, comprising the operating steps of:
excavating the polluted soil;
sieving the excavated polluted soil to separate a first part with a particle size that is less than a predetermined threshold value from a second part with a particle size that is greater than said predetermined threshold value, the predetermined threshold value being between 30 mm and 100 mm;
putting a first predetermined quantity of the first part of the sieved polluted soil in a reactor;
adding to said first predetermined quantity a first aqueous solution containing a second predetermined quantity of at least one enzyme, thus obtaining a solid - liquid mass;
stirring once the solid - liquid mass for a predetermined time, so that said at least one enzyme catalyses a microbial degradation of the pollutant present in the polluted soil; during said operating step of stirring, said at least one enzyme
interacting with the pollutant and catalysing the transformation of at least part of the pollutant into by-products, by means of chemical reactions between the pollutant and water and oxygen present in the solid - liquid mass and the pollutant at least partly detaching from the soil and passing into the liquid part of the solid - liquid mass; and
upon completion of the stirring step, separating a solid part from the solid - liquid mass, thus obtaining a residual aqueous suspension containing at least part of the by-products.

2. The decontaminating process according to claim 1, wherein, during the operating step of stirring the solid - liquid mass, the chemical reactions occur until the pollutant is at least partly mineralised.

3. The decontaminating process according to anyone of the foregoing claims, wherein, during the operating step of stirring the solid - liquid mass, said at least one enzyme carries out their catalytic action in the transformation of the pollutants into by-products by micro-organisms present in the soil; and
at least part of the pollutants detach from the soil by means of mechanical action of the first aqueous solution on the soil.

4. The decontaminating process according to anyone of the foregoing claims, wherein, during the operating step of stirring the solid - liquid mass, at least part of the micro-organisms produce surfactants which promote the formation of pollutant - water emulsions, improving the dispersion of the pollutant in the water.

5. The decontaminating process according to anyone of the foregoing claims, wherein the at least one enzyme is selected from the group comprising hydrolase, protease, lipase, amylase, cellulase, carboxylase, catalase and phospholipase.

6. The decontaminating process according to the anyone of the foregoing claims, wherein the at least one enzyme is selected from:
enzymes deriving from bacteria of the Bacilli family, including "Bacillus licheniformis", or from Pseudomonas;
enzymes deriving from fungi of the Thermomyces family, including "Thermomyces lanuginosus", or from "Aspergillus Oryzae"; and
enzymes contained in Pancreatin;
and mixtures thereof.

7. The decontaminating process according to anyone of the foregoing claims, wherein the operating step of separating a solid part from the solid - liquid mass also comprises the following operating step:
sieving the solid - liquid mass in such a way as to obtain the solid part and a second aqueous suspension; the solid part comprising soil with a particle size of between 500 µm and 100 mm;
filtering the second aqueous suspension to obtain the residual aqueous suspension.

8. The decontaminating process according to anyone of the foregoing claims, further comprising the operating step of uniting and mixing the solid part with the part having a particle size measurement that is greater than the predetermined threshold value; the operating step of uniting and mixing being carried out after the operating step of separating the solid part from the solid - liquid mass.

9. The decontaminating process according to anyone of the foregoing claims, further comprising, after the operating step of separating the residual aqueous suspension,
the operating steps of adding fresh enzymes to at least part of the residual aqueous suspension obtained in the separating step; and
using said aqueous solution to which fresh enzymes were added as the first aqueous solution for a new step of adding the first aqueous solution to the sieved polluted soil.

10. The decontaminating process according to anyone of the foregoing claims, further comprising, after the operating step of separating the residual aqueous suspension, the operating step of sending at least part of the residual aqueous suspension to a biological treatment.

11. The decontaminating process according to anyone of the foregoing claims, wherein the various operating steps result in a concentration of light hydrocarbons, C ≤ 12, in the decontaminated soil of less than 10 mg/kg.

12. The decontaminating process according to anyone of the foregoing claims, wherein the various operating steps result in a concentration of heavy hydrocarbons, C > 12, of less than 50 mg/kg.

13. The decontaminating process according to anyone of the foregoing claims, said process being carried out at ambient temperature.

14. The decontaminating process according to anyone of claims from 1 to 12, said process being carried out at a temperature between 30°C and 40°C.

## Patentansprüche

1. Verfahren zur Entgiftung von Böden, die durch mindestens einen aus Kohlenwasserstoffen, Dioxin und Phenolen ausgewählten Giftstoff vergiftet sind, umfassend die folgenden Arbeitsschritte:
Ausheben des vergifteten Bodens;
Sieben des ausgehobenen vergifteten Bodens zum Trennen eines ersten Teils mit einer Partikelgröße, die geringer als ein festgelegter Schwellwert ist, von einem zweiten Teil mit einer Partikelgröße, die größer als der festgelegte Schwellwert ist, wobei der festgelegte Schwellwert 30 mm bis 100 mm ist;
Legen einer ersten festgelegten Menge des ersten Teils des gesiebten vergifteten Bodens in einen Reaktor;
Hinzufügen zur ersten festgelegten Menge eine erste wässrige Lösung, enthaltend eine zweite festgelegte Menge mindestens eines Enzyms, wodurch eine festflüssige Masse erhalten wird;
einmaliges Umrühren der fest-flüssigen Masse für eine festgelegte Zeit, sodass das mindestens eine Enzym einen mikrobiellen Abbau des im vergifteten Boden vorhandenen Giftstoffs katalysiert, wobei das mindestens eine Enzym während des Arbeitsschritts des Umrührens mit dem Giftstoff interagiert und die Umwandlung zumindest eines Teils des Giftstoffs in Nebenprodukte katalysiert, mithilfe chemischer Reaktionen zwischen Giftstoff und Wasser und Sauerstoff, die in der fest-flüssigen Masse vorhandenen sind, und wobei sich der Giftstoff zumindest zum Teil vom Boden loslöst und in den flüssigen Teil der fest-flüssigen Masse übergeht; und
Trennen eines festen Teils von der fest-flüssigen Masse bei Fertigstellung des Schritts des Umrührens, wodurch eine restliche wässrige Suspension erhalten wird, enthaltend mindestens einen Teil der Nebenprodukte.

2. Entgiftungsverfahren nach Anspruch 1, wobei die chemischen Reaktionen während des Arbeitsschritts des Umrührens der fest-flüssigen Masse auftreten, bis der Giftstoff zumindest teilweise mineralisiert ist.

3. Entgiftungsverfahren nach einem der vorangehenden Ansprüche, wobei das mindestens eine Enzym während des Arbeitsschritts des Umrührens der fest-flüssigen Masse seine katalytische Wirkung in der Umwandlung der Giftstoffe in Nebenprodukte durch Mikroorganismen ausführt, die im Boden vorhanden sind; und
sich zumindest ein Teil der Giftstoffe vom Boden mithilfe mechanischer Einwirkung der ersten wässrigen Lösung auf den Boden loslöst.

4. Entgiftungsverfahren nach einem der vorangehenden Ansprüche, wobei zumindest ein Teil der Mikroorganismen während des Arbeitsschritts des Umrührens der fest-flüssigen Masse oberflächenaktive Stoffe produziert, welche die Bildung von Giftstoff-Wasser-Emulsionen fördern, wodurch sich die Dispersion des Giftstoffs im Wasser verbessert.

5. Entgiftungsverfahren nach einem der vorangehenden Ansprüche, wobei das mindestens eine Enzym aus der Gruppe, umfassend Hydrolasen, Proteasen, Lipasen, Amylasen, Cellulasen, Carboxylasen, Katalasen und Phospholipasen, ausgewählt wird.

6. Entgiftungsverfahren nach einem der vorangehenden Ansprüche, wobei das mindestens eine Enzym aus Folgendem ausgewählt wird:
Enzyme, die von Bakterien der Bacilli-Familie, einschließlich "Bacillus licheniformis" oder von Pseudomonaden stammen;
Enzyme, die von Pilzen der Thermomyces-Familie, einschließlich "Thermomyces lanuginosus", oder von "Aspergillus oryzae" stammen; und
in Pankreatin enthaltene Enzyme;
sowie Mischungen davon.

7. Entgiftungsverfahren nach einem der vorangehenden Ansprüche, wobei der Arbeitsschritt des Trennens eines festen Teils von der fest-flüssigen Masse auch den folgenden Arbeitsschritt umfasst:
Sieben der fest-flüssigen Masse, so dass der feste Teil und eine zweite wässrige Suspension erhalten werden, wobei der feste Teil Boden mit einer Partikelgröße von 500 µm bis 100 mm umfasst;
Filtern der zweiten wässrigen Suspension zum Erhalt der restlichen wässrigen Suspension.

8. Entgiftungsverfahren nach einem der vorangehenden Ansprüche, ferner umfassend den Arbeitsschritt des Zusammenführens und Vermischens des festen Teils mit dem Teil, der ein Partikelgrößenmaß aufweist, das größer als der festgelegte Schwellenwert ist, wobei der Arbeitsschritt des Zusammenführens und Vermischens nach dem Arbeitsschritt des Trennens des festen Teils von der fest-flüssigen Masse ausgeführt wird.

9. Entgiftungsverfahren nach einem der vorangehenden Ansprüche, ferner umfassend, nach dem Arbeitsschritt des Trennens der restlichen wässrigen Suspension,
die Arbeitsschritte des Hinzufügens von frischen Enzymen zu zumindest einem Teil der restlichen wässrigen Suspension, die im Schritt des Trennens erhalten wurde; und
Verwenden der wässrigen Lösung, zu der frische Enzyme hinzugefügt wurden, als die erste wässrige Lösung für einen neuen Schritt des Hinzufügens der ersten wässrigen Lösung zum gesiebten vergifteten Boden.

10. Entgiftungsverfahren nach einem der vorangehenden Ansprüche, ferner umfassend, nach dem Arbeitsschritt des Trennens der restlichen wässrigen Suspension, den Arbeitsschritt des Versendens zumindest eines Teils der restlichen wässrigen Suspension für eine biologische Behandlung.

11. Entgiftungsverfahren nach einem der vorangehenden Ansprüche, wobei die verschiedenen Arbeitsschritte in einer Konzentration leichter Kohlenwasserstoffe, C ≤ 12, im entgifteten Boden von weniger als 10 mg/kg resultieren.

12. Entgiftungsverfahren nach einem der vorangehenden Ansprüche, wobei die verschiedenen Arbeitsschritte in einer Konzentration schwerer Kohlenwasserstoffe, C > 12, von weniger als 50 mg/kg resultieren.

13. Entgiftungsverfahren nach einem der vorangehenden Ansprüche, wobei das Verfahren bei Umgebungstemperatur ausgeführt wird.

14. Entgiftungsverfahren nach einem der Ansprüche 1 bis 12, wobei das Verfahren bei einer Temperatur von 30 °C bis 40 °C ausgeführt wird.

## Revendications

1. Procédé pour la décontamination des sols pollués par au moins un polluant parmi des hydrocarbures, dioxine et phénols, comprenant les étapes opérationnelles suivantes :
creuser le sol pollué ;
tamiser le sol pollué creusé pour séparer une première partie présentant une granulométrie inférieure à une valeur seuil prédéterminée d'une seconde partie présentant une granulométrie supérieure à ladite valeur seuil prédéterminée, la valeur seuil prédéterminée se situant entre 30 mm et 100 mm ;
mettre une première quantité prédéterminée de la première partie du sol pollué tamisé dans un réacteur ;
ajouter à ladite première quantité prédéterminée une première solution aqueuse contenant une seconde quantité prédéterminée d'au moins un enzyme, obtenant ainsi une masse solide-liquide ;
agiter une fois la masse solide-liquide pendant un temps prédéterminé, de sorte que ledit au moins un enzyme catalyse une dégradation microbienne du polluant présent dans le sol pollué ; pendant ladite étape opérationnelle d'agitation, ledit au moins un enzyme interagissant avec le polluant et catalysant la transformation d'au moins une partie du polluant en sous-produits, par le biais de réactions chimiques entre le polluant et l'eau et l'oxygène présents dans la masse solide-liquide, et le polluant se détachant au moins partiellement du sol et passant dans la partie liquide de la masse solide-liquide ; et
à la fin de l'étape d'agitation, séparer une partie solide de la masse solide-liquide, obtenant ainsi une suspension aqueuse résiduelle contenant au moins une partie des sous-produits.

2. Procédé de décontamination selon la revendication 1, dans lequel, pendant l'étape opérationnelle d'agitation de la masse solide-liquide, les réactions chimiques se produisent jusqu'à la minéralisation au moins partielle du polluant.

3. Procédé de décontamination selon l'une quelconque des revendications précédentes, dans lequel, pendant l'étape opérationnelle d'agitation de la masse solide-liquide, ledit au moins un enzyme exerce son action catalytique dans la transformation des polluants en sous-produits via des micro-organismes présents dans le sol ; et
au moins une partie des polluants se détache du sol par une action mécanique de la première solution aqueuse sur le sol.

4. Procédé de décontamination selon l'une quelconque des revendications précédentes, dans lequel, pendant l'étape opérationnelle d'agitation de la masse solide-liquide, au moins une partie des micro-organismes produit des tensioactifs qui enclenchent la formation d'émulsions polluant/eau, optimisant la dispersion du polluant dans l'eau.

5. Procédé de décontamination selon l'une quelconque des revendications précédentes, dans lequel ledit au moins un enzyme est choisi dans le groupe comprenant hydrolase, protéase, lipase, amylase, cellulase, carboxylase, catalase et phospholipase.

6. Procédé de décontamination selon l'une quelconque des revendications précédentes, dans lequel ledit au moins un enzyme est choisi parmi :
des enzymes provenant des bactéries Bacillus, y compris « Bacillus licheniformis » ou des bactéries Pseudomonas ;
des enzymes provenant des champignons Thermomyces, y compris « Thermomyces lanuginosus », ou des champignons « Aspergillus oryzae », et
des enzymes contenus dans la Pancréatine ;
et leurs mélanges.

7. Procédé de décontamination selon l'une quelconque des revendications précédentes, dans lequel l'étape opérationnelle de séparation d'une partie solide de la masse solide-liquide, comprend aussi l'étape opérationnelle suivante :
tamiser la masse solide-liquide, de sorte à obtenir la partie solide et une seconde suspension aqueuse ; la partie solide comprenant un sol présentant une granulométrie entre 500 µm et 100 mm ;
filtrer la seconde suspension aqueuse pour obtenir la suspension aqueuse résiduelle.

8. Procédé de décontamination selon l'une quelconque des revendications précédentes, comprenant également l'étape opérationnelle d'unir et de mélanger la partie solide avec la partie présentant une granulométrie supérieure à la valeur seuil prédéterminée ; l'étape opérationnelle d'unir et de mélanger étant réalisée après l'étape opérationnelle de séparation de la partie solide de la masse solide-liquide.

9. Procédé de décontamination selon l'une quelconque des revendications précédentes, comprenant également, après l'étape opérationnelle de séparation de la suspension aqueuse résiduelle,
les étapes opérationnelles d'ajouter des enzymes frais à au moins une partie de la suspension aqueuse résiduelle obtenue à l'étape de séparation ; et
d'utiliser ladite solution aqueuse à laquelle ont été ajoutés des enzymes frais comme la première solution aqueuse pour une nouvelle étape d'ajout de la première solution aqueuse au sol pollué tamisé.

10. Procédé de décontamination selon l'une quelconque des revendications précédentes, comprenant également, après l'étape opérationnelle de séparation de la suspension aqueuse résiduelle, l'étape opérationnelle de soumettre au moins une partie de la suspension aqueuse résiduelle à un traitement biologique.

11. Procédé de décontamination selon l'une quelconque des revendications précédentes, dans lequel les différentes étapes opérationnelles aboutissent à une concentration d'hydrocarbures légers, C ≤ 12, dans le sol décontaminé de moins de 10 mg/kg.

12. Procédé de décontamination selon l'une quelconque des revendications précédentes, dans lequel les différentes étapes opérationnelles aboutissent à une concentration d'hydrocarbures lourds, C > 12, de moins de 50 mg/kg.

13. Procédé de décontamination selon l'une quelconque des revendications précédentes, ledit procédé étant réalisé à température ambiante.

14. Procédé de décontamination selon l'une quelconque des revendications 1 à 12, ledit procédé étant réalisé à une température entre 30 °C et 40 °C.
